# FASCICULE DE BREVET EUROPEEN

(11) **EP 0 331 536 B1**
(45) Date de publication et mention de la délivrance du brevet: **12.05.1993**
(21) Numéro de dépôt: 89400200.5
(22) Date de dépôt: 25.01.1989
(51) Int. Cl.: B23K 26/14

(54) **Buse de découpe laser, tête de découpe comportant une telle buse et procédé de découpe laser les mettant en oeuvre**
Laserschneiddüse, Schneidkopf mit einer solchen Düse und Verwendung beim Laserschneidverfahren
Lasercutting nozzle, cutting head with such a nozzle and usage in laser cutting procedure

(30) Priorité: 03.02.1988 FR 8801240
(43) Date de publication de la demande: 06.09.1989
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Van der Have, Philippe, F-75006 Paris (FR); Le Gall, Christian, F-95610 Eragny-sur-Oise (FR)
(74) Mandataire: Vesin, Jacques

(56) Documents cités:
- PATENT ABSTRACTS OF JAPAN vol. 5, no. 10 (1151)(682), 22 janvier 1981; & JP-A-55 141 392 (KOGYO GIJUTSUIN)
- PATENT ABSTRACTS OF JAPAN vol. 6, no. 17 (M-109)(895), 30 Janvier 1982 & JP-A-56 136295 (MITSUBISHI DENKI K.K.)
- PATENT ABSTRACTS OF JAPAN vol. 9 no. 261 (M-422)(1984), 18 octobre 1985 & JP-A-60 108192 (MATSUSHITA DENKI SANGYO)

## Description

La présente invention concerne une buse de découpe laser selon le préambule de la revendication 1 et une tête de découpe laser munie d'une telle buse.

Une buse de découpe selon le préambule de la revendication 1 est décrite dans le document JP-A-56-136295. Ce document décrit une buse dont le passage interne forme une tuyère dite de Laval, avec un convergent et un divergent coniques, le convergent se raccordant au col par une arête. Ce profil de passage interne permet d'injecter un gaz d'assistance de découpe laser à une vitesse supersonique.

Les lasers sont actuellement utilisés dans l'industrie, notamment pour le travail de tous les matériaux dans des applications aussi diverses que la découpe, le soudage, le marquage ou le traitement de surface.

Usuellement, pour une utilisation en coupage, ,le faisceau laser, à la sortie de la source de puissance, est dirigé par réflexion sur un miroir au moins, mobile ou fixe, vers une lentille par laquelle il est focalisé à proximité de la pièce à traiter. Un gaz d'assistance est injecté au niveau de la pièce par l'intermédiaire d'une tête de découpe placée entre la lentille et la pièce. La tête de découpe porte une buse, et elle comportent un passage central, par lequel passent le gaz d'assistance et le faisceau laser focalisé.

La qualité et la vitesse de la coupe sont déterminées d'une part par la puissance et la qualité optique du faisceau et, d'autre part, par la qualité et la vitesse du jet de gaz.

Les buses connues ne permettent pas de stabiliser convenablement un écoulement gazeux à haute vitesse et leur utilisation ne permet d'obtenir que des performances modestes de découpe du point de vue de la qualité et des vitesses de coupe. Ainsi, les modifications de direction de découpe engendrent des défauts de coupe et les turbulences du jet laissent aussi des traces visibles sur les faces de coupe.

La Demanderesse a mis en évidence que la forme de la buse est déterminante pour la qualité de la découpe.

La présente invention a pour objet de remédier à ces inconvénients en proposant une buse de découpe laser perfectionnée, selon la revendication 1.

Ces dispositions permettent des écoulements gazeux à haute vitesse plus stables et sensiblement dépourvus de turbulence.

Avantageusement, selon l'invention, le rapport l/d est compris entre 0,35 et 1 et l'enveloppe interne du tronçon amont est dépourvue d'angle vif, le tronçon amont comportant une partie aval se raccordant tangentiellement au col.

Ces caractériques, qui seront décrites plus en détail ci-après, permettent une découpe performante avec une consommation de gaz raisonnable. Hors des plages de dimensions décrites selon l'invention, les vitesses de coupe se dégradent.

Le document JP-A-60-108192 décrit une buse de découpe avec un passage interne comportant un tronçon conique convergent vers un orifice de sortie cylindrique. L'extérieur de la buse est recouvert d'une couche de caoutchouc électriquement conducteur associée à une couche d'électrode se terminant autour de l'orifice de sortie.

La présente invention concerne également des têtes de découpe laser équipées de buses selon l'invention.

Une tête de découpe équipée d'une telle buse est en particulier adaptée à la découpe d'aciers noirs, et notamment de tôles d'acier noir d'une épaisseur de 6 à 15 mm environ, comme cela apparaîtra dans la description suivante.

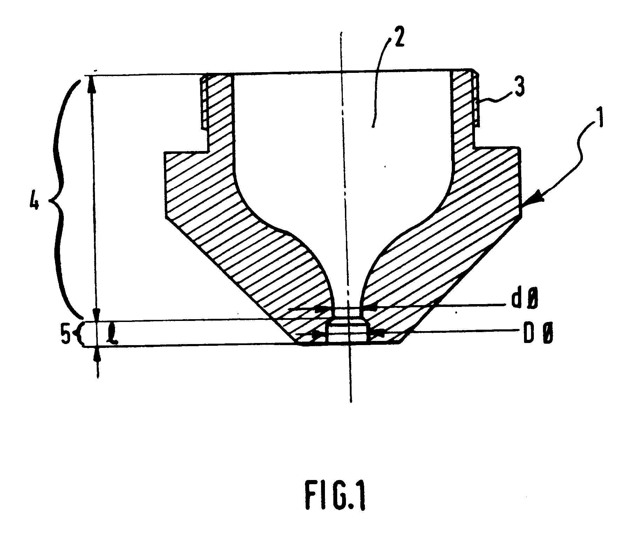

D'autres caractéristiques et avantages de l'invention apparaîtront à la lecture de la description détaillée et au vu de la figure unique qui représente, en coupe longitudinale, une buse selon l'invention.

Sur la figure unique, apparaît une buse 1 cylindrique avec un canal axial 2 où passent le faisceau focalisé et le gaz d'assistance. Un filetage 3 permet de fixer la buse en bout d'une tête de découpe, non représentée.

Dans le premier tronçon 4, le canal 2 ne présente aucun angle vif. L'extrémité aval du premier tronçon 4 est tangente à un cylindre de diamètre d.

Le second tronçon 5, subséquent au premier tronçon 4 est cylindrique de diamètre d et a une longueur axiale l.

L'extrémité amont du tronçon 5 est tronconique, comme il est possible de l'obtenir par usinage.

On a réalisé une buse telle que décrite selon l'invention ci-dessus, en cuivre, et on l'a montée sur la tête d'un dispositif de découpe laser usuel, la source de puissance est un laser au CO₂ (puissance 1500 W) et le gaz d'assistance de l'oxygène. La forme de l'enveloppe intérieure est constituée de deux arcs de cercle tangents dont l'un est convexe et l'autre concave, l'enveloppe intérieure présentant une tangente verticale à l'extrémité aval du premier tronçon 4. Dans cet exemple de réalisation de l'invention, la longueur l est d'environ 1 mm.

On a découpé un acier noir de 8 mm d'épaisseur à 1,50 m/mn en employant un débit de 60 à 70 l/mn. de gaz (vitesse sonique).

On a défini un indice de qualité de la coupe (i allant de 1 à 5, observation à l'oeil nu) i x Δ v est un critère de qualité de la buse. (Δv = vitesse de référence maximum obtenue - vitesse effective).

Par comparaison, on a réalisé la coupe du même acier dans les conditions analogues, c'est à dire avec une buse de type tuyère de Laval de diamètre intérieur 2,8 mm et diamètre terminal 4 mm, pour une vitesse de coupe de 1,2 m/mm et un débit de 100 l/min.

Dans ces conditions, on a i x Δ v = 10 %.

## Revendications

1. Buse de découpe laser, constituée d'un corps métallique définissant un passage interne pour un gaz d'assistance de découpe, comportant successivement et coaxialement un tronçon amont (4) convergeant vers un col, et un tronçon aval (5) ayant un diamètre de sortie (D) supérieur au diamètre (d) du col, caractérisée en ce que l'enveloppe intérieure du tronçon amont (4) est constituée de deux courbes tangeantes l'une à l'autre successivement concave et convexe, l'enveloppe intérieure du tronçon amont (4) se raccordant tangeantiellement à sa sortie à un cylindre de diamètre d qui constitue le col,
le tronçon aval (5) comportant successivement une partie tronconique divergente suivie d'une partie cylindrique de diamètre D et de longueur l.

2. Buse selon la revendication 2, caractérisée en ce que les deux courbes de l'enveloppe interne du tronçon amont (4) sont deux arcs de cercle.

3. Buse selon l'une des revendications 1 ou 2, caractérisée en ce que le rapport l/d est compris entre 0,35 et 1.

4. Buse selon l'une des revendications 1 à 3, caractérisée en ce que le rapport D/d est compris entre 1.1 et 3.

5. Buse selon l'une des revendications 1 à 4, caractérisée en ce que la longueur l est d'environ 1 mm.

6. Buse selon l'une des revendications 1 à 5, caractérisée en ce qu'elle est réalisée en cuivre.

7. Tête de découpe laser, caractérisée en ce qu'elle comporte une buse selon l'une des revendications précédentes.

8. Tête de découpe laser selon la revendication 7, caractérisée en ce qu'elle comporte des moyens d'alimentation en gaz d'assistance à un débit suffisant pour obtenir une vitesse sonique du gaz dans le passage interne.

9. Tête de découpe laser selon la revendication 8, caractérisée en ce que le gaz est l'oxygène.

## Patentansprüche

1. Laserschneiddüse, gebildet aus einem metallischen Körper, der einen inneren Durchgang für ein Schneidhilfsgas bildet, wobei die Düse nacheinander und koaxial einen aufstromigen Abschnitt (4) aufweist, der zu einem Kragen hin konvergiert und einen abstromigen Abschnitt (5) aufweist, der einen Ausgangsdurchmesser (D) hat, welcher größer ist als der Durchmesser (d) des Kragens, dadurch gekennzeichnet, daß die innere Hülle des aufstromigen Abschnittes (4) aus zwei tangierenden Kurven besteht, die nacheinander konkav und konvex sind, wobei sich die innere Hülle des aufstromigen Abschnittes (4) tangential zu seinem Ausgang mit einem Zylinder des Durchmessers d verbindet, der den Kragen bildet, wobei der abstromige Abschnitt (5) nacheinander einen kegelstumpfartigen divergierenden Teil aufweist, der von einem zylindrischen Teil des Durchmessers D und der Länge l gefolgt ist.

2. Düse nach Anspruch 2, dadurch gekennzeichnet, daß die beiden Kurven der inneren Hülle des aufstromigen Abschnittes (4) zwei Kreisbögen sind.

3. Düse nach einem der Ansprüche 1 oder 2, dadurch gekennzeichnet, daß das Verhältnis l/d zwischen 0,35 und 1 liegt.

4. Düse nach einem der Ansprüche 1 bis 3, dadurch gekennzeichnet, daß das Verhältnis D/d zwischen 1.1 und 3 liegt.

5. Düse nach einem der Ansprüche 1 bis 4, dadurch gekennzeichnet, daß die Länge l ungefähr 1 mm beträgt.

6. Düse nach einem der Ansprüche 1 bis 5, dadurch gekennzeichnet, daß sie aus Kupfer hergestellt ist.

7. Laserschneidkopf, dadurch gekennzeichnet, daß er eine Düse nach einem der vorhergehenden Ansprüche aufweist.

8. Laserschneidkopf nach Anspruch 7, dadurch gekennzeichnet, daß er Versorgungsmittel für Hilfsgas mit einem ausreichenden Durchsatz aufweist, um eine Schallgeschwindigkeit des Gases in dem inneren Durchgang zu erreichen.

9. Laserschneidkopf nach Anspruch 8, dadurch gekennzeichnet, daß das Gas Sauerstoff ist.

## Claims

1. Laser cutting nozzle, formed by a metal body defining an internal passage for a cutting assistance gas, comprising successively and coaxially an upstream section (4) converging towards a neck, and a downstream section (5) having an outlet diameter (D) greater than the diameter (d) of the neck, characterised in that the internal shell of the upstream section (4) is formed by two mutually tangential curves, successively concave and convex, the internal shell of the upstream section (4) being connected tangentially at its outlet to a cylinder having the diameter d which forms the neck, the upstream section (5) comprising, successively, a divergent tapered part followed by a cylindrical part having the diameter D and the length l.

2. Nozzle according to claim 2, characterised in that the two curves of the internal shell of the upstream section (4) are two arcs of a circle.

3. Nozzle according to one of claims 1 or 2, characterised in that the ratio l/d is between 0.35 and 1.

4. Nozzle according to claims 1 to 3, characterised in that the ratio D/d is between 1.1 and 3.

5. Nozzle according to one of claims 1 to 4, characterised in that the length l is approximately 1 mm.

6. Nozzle according to one of claims 1 to 5, characterised in that it is produced in copper.

7. Laser cutting head, characterised in that it comprises a nozzle according to one of the preceding claims.

8. Laser cutting head according to claim 7, characterised in that it comprises means for supplying assistance gas at a flow rate sufficient to achieve sonic speed of the gas in the internal passage.

9. Laser cutting head according to claim 8, characterised in that the gas is oxygen.
